# EUROPÄISCHE PATENTANMELDUNG

(11) **EP 1 215 025 A2**
(43) Veröffentlichungstag der Anmeldung: **19.06.2002**
(21) Anmeldenummer: 01122160.3
(22) Anmeldetag: 15.09.2001
(51) Int. Cl.: B29C 44/12

(54) **Verfahren zum Herstellen eines faserverstärkten Kunststoff-Sandwichbauteiles**

(30) Priorität: 18.11.2000 DE 10057365
(71) Anmelder: Bayerische Motoren Werke Aktiengesellschaft, 80809 München (DE)
(72) Erfinder: Weiss, Olaf, 85402 Kranzberg (DE); Sigl, Klaus-Peter, 84030 Ergolding (DE)

(57) **Zusammenfassung**

Die Erfindung betrifft ein Verfahren zum Herstellen eines faserverstärkten Kunststoff-Sandwichbauteiles nach dem LFI-Verfahren (=Langfaser-Injection), bei welchem in ein geeignetes Werkzeug ein Kunststoffschaum-Glasfaser-Gemisch (LFI-Material) eingebracht wird. Dabei wird zusätzlich in das Werkzeug eine Zwischenschichtstruktur eingebracht, die in diesem Werkzeug vom Faser-Kunststoffschaum-Gemisch umhüllt wird. Es kann nach Einbringen einer ersten LFI-Material-Schicht auf diese zumindest bereichsweise eine Zwischenschichtstruktur aufgebracht werden, auf die daraufhin vollflächig oder teilflächig und dabei die Zwischenschichtstruktur einhüllend eine weitere LFI-Material-Schicht aufgetragen wird. Es kann aber auch zunächst die Zwischenschichtstruktur in den Formhohlraum des Werkzeuges eingebracht und danach im geschlossenen Werkzeug mit dem LFI-Material umspritzt werden. Die Zwischenschichtstruktur kann durch ein vorgefertigtes Einlegeteil aus einem expandierenden Kunststoff oder aus einem Leichtmetall oder aus aus einem leichteren Naturwerkstoff gebildet werden oder aus porösen Gewebedecklagen mit dazwischen liegenden Verbindungsfäden bestehen.

## Beschreibung

Die Erfindung betrifft ein Verfahren zum Herstellen eines faserverstärkten Kunststoff-Sandwichbauteiles nach dem LFI-Verfahren (=Langfaser-Injection), bei welchem in ein geeignetes Werkzeug ein Faser-Kunststoffschaum-Gemisch (LFI-Material genannt) eingebracht wird. Insbesondere kann es sich bei diesem LFI-Material um ein Reaktionsschaum-Gemisch aus Polyol, Isocyanat und fasrigen Verstärkungsstoffen handeln. Zum technischen Umfeld wird beispielshalber auf das japanische Patent-Abstract JP-07266432-A verwiesen.

Grundsätzlich sind faserverstärkte Kunststoffbauteile in den unterschiedlichsten Ausführungsformen bekannt, wobei neben Glas-, Kohlenstoff-, Mineral- oder Aramidfasern auch Naturfasernfasern unterschiedlicher Länge zur Steigerung der Bauteilsteifigkeit und -festigkeit zum Einsatz kommen. Eine etwas jüngere Herstellungstechnologie führt zu den sog. LFI-Teilen, zu deren Herstellung in ein offenes oder auch geschlossenes Werkzeug ein Gemisch aus Kunststoffschaum-Material und gebrochenen, bspw. gehäkselten Glasfasern eingebracht wird, wonach das Werkzeug geschlossen wird, so dass der Kunststoffschaum im Formhohlraum dieses Werkzeuges (in der sog. Werkzeug-Kavität) expandieren und vernetzen kann. Anschließend kann das ausgehärtete Bauteil aus dem Werkzeug entnommen werden. Dabei sei bereits hier darauf hingewiesen, dass das bekannte LFI-Verfahren bislang lediglich mit Glasfasern als Verstärkungsfasern arbeitet, dass aber grundsätzlich (und insbesondere für die vorliegende Erfindung) auch andere Faserarten, insbesondere aus der obigen Aufzählung, verwendet werden können.

Es hat sich gezeigt dass beim Expandieren des Schaummaterials im geschlossenen Werkzeug die im Werkstoff-Gemisch enthaltenen Fasern/Glasfasern nicht gleichmäßig homogen über das herzustellende Bauteil verteilt werden, sondern dass deren Verteilung in der Bauteilstruktur mehr oder weniger zufällig ist. Damit ist aber die erzielbare Steifigkeit oder Festigkeit des Bauteiles auch mehr oder weniger zufällig, d.h. nicht exakt reproduzierbar.

Hier soll nun aufgezeigt werden, wie unter Anwendung der LFI-Technologie leichtgewichtige Bauteile oder Strukturen erzeugt werden können, die sich gleichzeitig durch eine relativ hohe Steifigkeit oder Festigkeit auszeichnen, wobei diese entsprechenden Kenngrößen bei sämtlichen solchermaßen in einem Werkzeug gefertigten Bauteilen zumindest im wesentlichen gleich sollen (= Aufgabe der vorliegenden Erfindung).

Die Lösung dieser Aufgabe ist dadurch gekennzeichnet, dass neben dem LFI-Material zusätzlich in das Werkzeug eine Zwischenschichtstruktur eingebracht wird, die in diesem Werkzeug vom Faser-Kunststoffschaum-Gemisch (= LFI-Material) umhüllt wird. Dabei kann nach Einbringen einer ersten LFI-Schicht auf diese zumindest bereichsweise eine Zwischenschichtstruktur aufgebracht werden und daraufhin vollflächig oder teilflächig und dabei die Zwischenschichtstruktur einhüllend eine weitere LFI-Schicht aufgetragen werden. Das besagte Umhüllen der Zwischenstruktur kann auch durch einen einfachen LFI-Eintrag in das Werkzeug mit anschließendem Umfließen der Zwischenschichtstruktur (bzw. des auch sog. Kernmaterials) in Folge des Schäumprozesses geschehen. Vorteilhafte Weiterbildungen dieser grundsätzlichen Verfahrenswiesen sind Inhalt der weiteren Unteransprüche.

Grundsätzlich können mit dem genannten Haupt-Material, nämlich dem Faser-Kunststoffschaum- Gemisch, relativ leichte Bauteile gefertigt werden, die aufgrund des Faseranteils (bspw. Glasfaseranteils) bereits eine gesteigerte Festigkeit oder Steifigkeit gegenüber Kunststoffbauteilen ohne derartige Fasern besitzen. Erfindungsgemäß sind nun zusätzliche festigkeitssteigernde Maßnahmen vorgesehen, und zwar durch Bildung einer zumindest partiellen Sandwichstruktur. Vorgeschlagen wird, zumindest bereichsweise (bezüglich der Gesamt-Oberfläche des zu fertigenden Bauteils) zumindest zwei sog. LFI-Schichten vorzusehen, zwischen denen eine sog. Zwischenschichtstruktur (auch Kern genannt) vorgesehen wird. Dabei hat sich gezeigt, dass dann außerhalb oder abseits dieser Zwischenschichtstruktur die Verteilung der Glasfasern im Kunststoffschaummaterial relativ homogen und somit im wesentlichen gleichmäßig reproduzierbar ist. Ursächlich hierfür ist in erster Linie, dass aufgrund der versteifenden Zwischenschichtstruktur die Kunststoffschaumschicht(en) (mit integrierten Verstärkungs-Fasern) im Bereich abseits dieser Zwischenschichtstruktur so dünn gestaltet werden kann/können, dass die Verstärkungs-Fasern quasi zwangsläufig gleichmäßig verteilt werden bzw. bleiben.

Zusätzlich zu diesem vorteilhaften Effekt wirkt selbstverständlich auch noch die Zwischenschichtstruktur als solche im Sinne einer Verstärkung oder Versteifung des fertigen Sandwich-Bauteils. Im Hinblick hierauf kann die Zwischenschichtstruktur in sich auseichend schubstabil sein und insbesondere geeignete sog. Schubstege zur Übertragung von Kräften aufweisen. Bspw. ein geschäumter Werkstoff erfüllt diese Anforderungen in idealer Weise und zeichnet sich ferner vorteilhafterweise durch eine geringe Dichte aus.

Wie bereits kurz angegeben wurde, kann das erfindungsgemäße Verfahren in unterschiedlichen Einzelschritten umgesetzt werden.

So kann zunächst - wie bisher üblich - in ein offenes Werkzeug eine erste Schicht von LFI-Material eingebracht werden, wobei dieser entsprechende Werkstoffauftrag auf die Werkzeugoberfläche einstufig oder mehrstufig erfolgen kann. Daraufhin wird in das noch offene Werkzeug auf diese erste Schicht die sog. Zwischenschichtstruktur aufgebracht, die sich flächenmäßig bevorzugt nur über einen Teilbereich dieser ersten Schicht erstreckt. Anschließend wird eine zweite LFI-Schicht derart aufgetragen, dass die Zwischenschichtstruktur abschließend vollständig vom Faser-Kunststoffschaum-Gemisch umhüllt ist. Dieses Auftragen der zweiten LFI-Schicht kann dabei vollflächig, d.h. über der gesamten Fläche der ersten Schicht, oder nur teilflächig, d.h. im wesentlichen im Bereich der sog. Zwischenschichtstruktur erfolgen. Abschließend wird das Werkzeug geschlossen, wonach das LFI-Schaummaterial expandieren kann und dabei die Zwischenschichtstruktur vollständig und komplett umschließt. Aus dem Werkzeug entnommen werden kann danach das fertige Sandwichbauteil mit der integrierten Zwischenschichtstruktur, bspw. in Form einer lokalen Verstärkung oder Verdickung als sog. Kern, der/die eine erhebliche Festigkeitssteigerung bewirkt. Wie bereits erwähnt wurde, sind bei diesem Bauteil die Fasern im Kunststoffmaterial abseits der sog. Zwischenschichtstruktur relativ homogen (und insbesondere im wesentlichen reproduzierbar homogen) verteilt.

Das erfindungsgemäße Herstellungsverfahren beinhaltet aber auch einen einfachen, d.h. einmaligen Eintrag von LFI-Material in das Werkzeug. Hiervon bleibt unbenommen, ob der Kern, d.h. die Zwischenschichtstruktur vor dem LFI-Eintrag mit geeigneten Methoden im Werkzeug-Unterteil oder im Werkzeug-Oberteil fixiert wird. Es kann somit zunächst der Kern in das Werkzeug eingelegt und danach mit LFI-Material übersprüht werden, wonach das Werkzeug geschlossen wird. Es kann aber auch zunächst LFI-Material in das Werkzeug eingetragen werden und danach mit dem Schließen des Werkzeugs oder eines zwischen dem Werkzeug-Oberteil und Werkzeug-Unterteil eingebrachten Fixier-Positionierrahmens die Zwischenschichtstruktur in das LFI-Material eingedrückt werden. Im geschlossenen Werkzeug wird danach mit dem Expandieren des LFI-Schaummaterials die Zwischenschichtstruktur (= der Kern) vollständig und komplett umhüllt. Aus dem Werkzeug entnommen werden kann danach das fertige Sandwichbauteil mit der integrierten Zwischenschichtstruktur in Form einer lokalen Verstärkung. Dabei sind bei diesem Bauteil die Fasern im Kunststoffmaterial abseits der sog. Zwischenschichtstruktur relativ homogen (und insbesondere im wesentlichen reproduzierbar homogen) verteilt.

Es sei noch erwähnt, dass als geeignete Methode des Fixierens der Zwischenschichtstruktur bzw. des Sandwich-Kernes im Werkzeug unter anderem ein Aufstecken dieses Kerns auf Dorne, die Verwendung von kernmaterialfremden Abstandshaltern oder von kernmaterialeigenen Geometrien mit selbem Zweck genutzt werden kann. Die Fixierung hat neben der Lagedefinition des Sandwich-Kerns während des Fertigungsablaufes auch die Aufgabe, den Kern gegen den sich ergebenden Schäumdruck abzustützen und das gewünschte Umfließen des Kerns mit dem LFI-Material während des Formbildungsprozesses im Werkzeug-Formhohlraum zu gewährleisten.

Was den Kern bzw. die Zwischenschichtstruktur betrifft, so kann es sich hierbei um ein vorgefertigtes sog. Einlegeteil handeln, das bspw. mittels eines geeigneten Handlingsgerätes in das geöffnete Werkzeug (bspw. auf die genannte erste LFI-Schicht) gelegt wird. Insbesondere wenn sich die Zwischenschichtstruktur flächenmäßig nur über einen Teilbereich der ersten Schicht erstreckt, sollten in zumindest einer der (bevorzugt zwei) Formhälften des Werkzeuges geeignete Aussparungen oder dgl. zur Aufnahme dieser Zwischenschichtstruktur vorgesehen sein, um das Werkzeug trotz der daraus resultierenden Verdickung oder Verstärkung schließen zu können. Derartige Aussparungen gewährleisten dabei auch, dass die Zwischenschichtstruktur wie gewünscht exakt positioniert wird, wobei letzteres auch durch geeignete Vorrichtungen - bspw. am besagten Handlingsgerät - sichergestellt werden kann.

Bezüglich der Ausbildung der Zwischenschichtstruktur kann es sich hierbei um ein vorgefertigtes Einlegeteil insbesondere aus einem relativ leichten Werkstoff handeln, um den erzielbaren Festigkeitsgewinn nicht durch eine übermäßige Gewichtszunahme erkaufen zu müssen. Die Dichte des für die Zwischenschichtstruktur verwendeten Materials sollte demnach bevorzugt unterhalb derjenigen des LFI-Materials liegen. So kann die Zwischenschichtstruktur aus einem vorzugsweise expandierenden Kunststoff bestehen, bspw. aus EPP, EPC oder EPS sowie PUR und TPU-Schäumen. Alternativ kann diese flächige oder dreidimensional geformte Zwischenschichtstruktur bzw. das vorgefertigte Einlegeteil aus einem Leichtmetall, bspw. Mg/Al (oder aus Leichtmetallschaum) bestehen, es kommen aber auch leichtere Naturwerkstoffe, wie bspw. Holz, Pappe oder Papierwaben in Frage. Daneben ist der Einsatz von recycelten Kunststoffmaterialien möglich, wobei die Gestalt dieser Zwischenschichtstruktur bzw. des entsprechenden Einlegeteiles hinsichtlich der jeweiligen Anforderungen optimiert werden kann. Bspw. sind in diesem Zusammenhang auch Wellblechstrukturen oder dgl. möglich.

Der z.B. offen- oder geschlossenporige Sandwich-Kern (= Zwischenschichtstruktur) kann sowohl undurchlässig als auch permeabel in seinem Verhalten der Stoffdurchlässigkeit sein. Es können Verfahren zur Haftungsverbesserung der Sandwichkomponenten untereinander angewandt werden. Diese sind u.a. die physikalische, mechanische oder chemische Veränderungen oder Aktivierung der Kern-Oberfläche, die Additivierung des Kernmaterials oder auch des LFI-Materials, und zwar insbesondere im Hinblick auf eine Wirkung als Haftvermittler.

Eine besonders vorteilhafte Weiterbildung sieht vor, dass die Zwischenschichtstruktur durch poröse oder auch filzartige Gewebedecklagen mit dazwischen liegenden Verbindungsfäden gebildet wird. Dann kann nach dem Schließen des Werkzeuges, d.h. beim Aufschäumen des LFI-Materials reines Schaummaterial ohne Glasfasern in diese Zwischenschichtstruktur eindringen, und zwar aufgrund der Porosität, so dass reines Schaummaterial in den Raum zwischen die Gewebedecklagen gelangt, wohingegen die Glasfasern von diesen Gewebedecklagen zurückgehalten werden. Beim Aushärten des Schaummaterials bildet sich dann zwischen den Gewebedecklagen zusammen mit den Verbindungsfäden eine relativ steife Zwischenschichtstruktur heraus, wobei sich vorteilhafterweise die Glasfasern, welche - wie bereits gesagt - im wesentlichen nicht in die Gewebestruktur eindringen können - konzentriert im werkzeugnahen Randbereich des Sandwichbauteiles ansammeln, so dass hierdurch die Steifigkeit bzw. Festigkeit (insbesondere hinsichtlich Biegung und Torsion) dieses Sandwichbauteiles weiter gesteigert wird. Die daraus resultierende konzentrierte Ansammlung von Glasfasern im Randbereich des Sandwichbauteiles führt somit zu einer vorteilhaften und gezielten Randzonen-Verstärkung.

Abschließend sei noch ausdrücklich darauf hingewiesen, dass eine Vielzahl von Details abweichend von obigen Erläuterungen gestaltet sein kann, ohne den Inhalt der Patentansprüche zu verlassen. Stets erhält man mit den erfindungswesentlichen Merkmalen eine wirkungsvolle Steifigkeitserhöhung sowie eine reproduzierbar gleichmäßige Glasfaserverteilung in den Randzonen oder Wandbereichen des solchermaßen gefertigten Sandwichbauteiles.

## Patentansprüche

1. Verfahren zum Herstellen eines faserverstärkten Kunststoff-Sandwichbauteiles nach dem LFI-Verfahren (=Langfaser-Injection), bei welchem in ein geeignetes Werkzeug ein Faser-Kunststoffschaum-Gemisch (LFI-Material), insbesondere ein Glasfaser-Kunststoffschaum-Gemisch eingebracht wird,
**dadurch gekennzeichnet, dass** zusätzlich in das Werkzeug eine Zwischenschichtstruktur eingebracht wird, die in diesem Werkzeug vom Faser-Kunststoffschaum-Gemisch umhüllt wird.

2. Verfahren nach Anspruch 1,
**dadurch gekennzeichnet, dass** nach Einbringen einer ersten LFI-Material-Schicht auf diese zumindest bereichsweise eine Zwischenschichtstruktur aufgebracht wird, und dass daraufhin vollflächig oder teilflächig und dabei die Zwischenschichtstruktur einhüllend eine weitere LFI-Material-Schicht aufgetragen wird.

3. Verfahren nach Anspruch 1,
**dadurch gekennzeichnet, dass** zunächst die Zwischenschichtstruktur in den Formhohlraum des Werkzeuges eingebracht wird und dass danach diese Zwischenschichtstruktur im geschlossenen Werkzeug mit dem LFI-Material umspritzt wird.

4. Verfahren nach einem der vorangegangenen Ansprüche,
**dadurch gekennzeichnet, dass** die Zwischenschichtstruktur durch ein vorgefertigtes Einlegeteil aus einem expandierenden Kunststoff gebildet wird.

5. Verfahren nach einem der Ansprüche 1 - 3,
**dadurch gekennzeichnet, dass** die Zwischenschichtstruktur durch ein vorgefertigtes Einlegeteil aus einem Leichtmetall gebildet wird.

6. Verfahren nach einem der Ansprüche 1 - 3,
**dadurch gekennzeichnet, dass** die Zwischenschichtstruktur durch ein vorgefertigtes Einlegeteil aus einem Naturwerkstoff gebildet wird, der eine geringere Dichte als das LFI-Material besitzt.

7. Verfahren nach einem der Ansprüche 1 - 3,
**dadurch gekennzeichnet, dass** die Zwischenschichtstruktur durch poröse oder filzartige Gewebedecklagen mit dazwischen liegenden Verbindungsfäden gebildet wird.
